Europäisches Patentamt

European Patent Office

Office européen des brevets

(19)

(11)    EP 0 786 623 B1

(12)    **EUROPÄISCHE PATENTSCHRIFT**

(45) Veröffentlichungstag und Bekanntmachung des Hinweises auf die Patenterteilung:
**29.03.2000   Patentblatt 2000/13**

(51) Int Cl.⁷: **F21S 11/00**, F21V 8/00

(21) Anmeldenummer: **96120310.6**

(22) Anmeldetag: **18.12.1996**

(54) **Vorrichtung zum Versorgen eines Raumes mit Blendfreiem, diffusem Sonnenlicht**

Device for providing a room with anti-glare diffuse sun-light

Dispositif pour éclairer une pièce à partir d'une lumiére solaire non-aveuglante et diffuse

(84) Benannte Vertragsstaaten:
**AT CH DE ES FR GB IT LI**

(30) Priorität: **26.01.1996   DE 29601308 U**

(43) Veröffentlichungstag der Anmeldung:
**30.07.1997   Patentblatt 1997/31**

(73) Patentinhaber: **Federmann, Helmut, Dr.**
**51427 Bergisch Gladbach (DE)**

(72) Erfinder: **Federmann, Helmut, Dr.**
**51427 Bergisch Gladbach (DE)**

(74) Vertreter: **Hennicke, Albrecht, Dipl.-Ing.**
**Patentanwälte Dipl.-Ing. Buschhoff**
**Dipl.-Ing. Hennicke**
**Dipl.-Ing. Vollbach,**
**Kaiser-Wilhelm-Ring 24**
**50672 Köln (DE)**

(56) Entgegenhaltungen:
**EP-A- 0 718 547        DE-A- 3 604 269**
**FR-A- 2 570 164        US-A- 4 272 156**
**US-A- 4 297 000        US-A- 4 389 085**
**US-A- 4 459 642**

EP 0 786 623 B1

**Beschreibung**

Die Erfindung betrifft eine Vorrichtung zum Versorgen eines Raumes mit blendfreiem, diffusem Sonnenlicht, mit mindestens einem in einer der Sonne zugekehrten Raum-Umgebungsfläche anzuordnenden, gebogenen Lichtlenkelement aus lichtdurchlässigem Material, das eine Einlaßfläche, eine Auslaßfläche und mindestens eine Leitgrenzfläche für Sonnenstrahlen aufweist und derart ausgebildet ist, daß es die auf die Einlaßfläche auftreffenden Sonnenstrahlen zerstreut und auf eine bestimmte Stelle des Raumes lenkt, wobei die Einlaßfläche und die Auslaßfläche des Lichtlenkelementes unter einem Winkel zueinander angeordnet sind.

Arbeits- und Büroräume müssen möglichst gleichmäßig und so beleuchtet werden, daß die an ihrem Arbeitsplatz sitzenden oder stehenden Personen für ihre Arbeit genügend Licht zur Verfügung haben und nicht geblendet werden. Eine solche gleichmäßige und blendfreie Beleuchtung ist jedoch mit Sonnenlicht allein schwer zu erreichen, da die Sonne über den Lauf des Tages und in unterschiedlichen Jahreszeiten verschiedene Stellungen einnimmt und unter verschiedenen Höhenwinkeln und seitlichen Winkeln durch die Fenster in den zu beleuchtenden Raum einfällt.

Oftmals ist es auch erwünscht, nur bestimmte Stellen im Inneren eines Raumes, beispielsweise einen Maschinenplatz oder einen Arbeitstisch, den ganzen Tag lang gleichmäßig mit Sonnenlicht zu beleuchten, den übrigen Raum aber im Dämmerlicht zu lassen. Es ist dann notwendig, durch ein Dachfenster oder ein Oberlicht die über den Tag einfallenden Sonnenstrahlen auf die gewünschte Stelle zu lenken, jedoch gleichzeitig für eine gute Zerstreuung und gleichmäßige Helligkeit über den Tag hinweg zu sorgen.

Um einen Raum gleichmäßig mit blendfreiem, diffusem Sonnenlicht zu versorgen, ist es bekannt, in einer der Sonne zugekehrten Raum-Umgebungsfläche als Fenster Glasblöcke vorzusehen, die horizontal angeordnete Prismen aufweisen, welche die in den Raum einfallenden Lichtstrahlen nach oben gegen die Decke lenken (DE-AS 1 084 212). Die hierdurch intensiv angestrahlte Raumdecke reflektiert dann diffus das empfangene Licht, die Helligkeitsverhältnisse im Raum werden aber hierdurch nicht gleichmäßiger. Außerdem wird die Helligkeit der Beleuchtung nicht gelenkt.

Um eine gleichmäßige, diffuse Beleuchtung zu erhalten, ist es aus der genannten Druckschrift auch schon bekannt, auf der Außenseite von mit waagerechten Prismen versehenen Hohlblöcken Vertikalrippen anzuordnen, welche die Lichtstrahlen in ihrer horizontalen Richtung ablenken und streuen, so daß die Lichtstrahlen nicht nur gegen die Decke gelenkt, sondern vorher auch teilweise in horizontaler Richtung umgelenkt werden, wodurch auch eine Streuung in horizontaler Richtung erfolgt.

Es ist auch bekannt, Oberlichter für Deckenbeleuchtung mit Sonnenlicht so auszubilden, daß die Lichtintensität bei sich ändernden Sonnenständen vergleichmäßigt wird (DE-AS 1 043 240). Das Oberlicht oder Dachfenster besteht bei dieser bekannten Ausführung aus zwei im Abstand voneinander angeordneten Glasplatten, die auf ihren einander gegenüberliegenden Innenseiten parallele Prismen tragen. Die der Sonne zugekehrte Einleitplatte reflektiert unter steilem Winkel einfallende Sonnenstrahlen, während sie unter flachem Winkel einfallende Sonnenstrahlen durchläßt. Die dem Raum zugekehrte untere Ausleitplatte ist auf ihrer der Einleitplatte zugewandten Seite ebenfalls mit Prismen versehen, die die auftreffenden Sonnenstrahlen ablenken und hierdurch streuen.

Es sind auch Leuchtkörper mit prismatischer Lichtführung bekannt (DE-OS 34 30 191), bei dem Licht von einer zentralen Lichtquelle, beispielsweise von der Sonne, im Inneren eines langgestreckten Hohlkörpers geführt wird, dessen Umfangsflächen im wesentlichen in Oktatur liegen. Die Sonnenstrahlen werden im Inneren des hohlen Leuchtkörpers an dessen Innenwänden immer wieder total reflektiert und können an Stellen, wo die Oberflächenbeschaffenheit der Innenwände des Leuchtkörpers geändert ist, aus der lichtdurchlässigen Umfangswand austreten, so daß es möglich ist, die prismatische Lichtführung an bestimmten Stellen leuchten zu lassen.

Derartige Lichtführungen sind aufwendig und umständlich und eignen sich nur als Punktbeleuchtung, nicht aber zum Erhellen eines Raumes mit blendfreiem, diffusem Sonnenlicht.

Es gibt auch schon Vorrichtungen zum Erhellen eines dunklen Raumes, beispielsweise eines fensterlosen Kellerraumes, zu dem Tageslicht keinen Zutritt hat (FR-A-2 570 164 und DE-A-36 04 269). Um außerhalb des zu erhellenden Raumes möglichst viel Licht aufzufangen, zu sammeln und konzentriert in den zu erhellenden Raum zu leiten, haben diese bekannten Beleuchtungsvorrichtungen eine möglichst große, dem Licht zugekehrte Einlaßfläche, die das Licht auffängt und in Fluoreszenzlicht umwandelt. Dieses Fluoreszenzlicht wird dann durch Lichtleitelemente in Form von Kunststoffplatten oder Lichtleitfasern in den zu erhellenden Raum weitergeleitet und dort als diffuses, farbiges Licht in den zu erhellenden Raum abgestrahlt.

Da die Lichtauffangfläche dieser bekannten Vorrichtungen sehr groß sein muß, um genügend Licht zu sammeln, können diese Lichtauffangelemente nicht übereinandergestapelt und auf kleinstem Raum untergebracht werden.

Es gibt auch einen Beleuchtungskörper (US-A-4,459,642), bei dem von einer punktförmigen Lichtquelle ausgehendes Licht in einem teillichtdurchlässigen Hohlzylinder mehrfach reflektiert und gleichmäßig über 360° gestreut wird, um einen ganzen Raum mit diffusem Licht zu erfüllen. Mit diesem bekannten Beleuchtungskörper kann jedoch direkt einfallendes Sonnenlicht nicht so in einen Raum geleitet werden, daß nur bestimmte Stellen des Raumes gleichmäßig und blendfrei beleuchtet werden, während der übrige Raum von der Vorrichtung nicht beleuchtet wird.

Es ist ferner eine Tageslicht-Beleuchtungsvorrichtung der eingangs näher erläuterten Art bekannt (EP 0 524 388 B1), bei der auf einer lichtdurchlässigen Scheibe in der Außenwand eines Gebäudes lichtlenkende Hologramme angeordnet sind, die einfallendes Licht auf einen schmaleren, horizontalen Ausfalls-Winkelbereich konzentrieren und die mit Lichtleitelementen zur Höhenablenkung versehen sind. Die Lichtleitelemente sind hierbei bogenförmige Lichtleitkörper, deren Lichteintrittsfläche und Lichtaustrittsfläche unter einem von Null verschiedenen Winkel so zueinander angeordnet sind, daß einfallendes Tageslicht zur Decke des Raumes gelenkt wird, in dessen Außenwand die Tageslicht-Beleuchtungsvorrichtung angeordnet ist.

Aufgabe der Erfindung ist es, eine Vorrichtung der eingangs näher erläuterten Art so auszubilden, daß direkt einfallendes Sonnenlicht unabhängig vom jahreszeitlichen Sonnenstand so in einen Raum geleitet wird, daß bestimmte Stellen des Raumes, beispielsweise die Decke und der obere Teil der Wände des Raumes oder eine in diesem angeordnete Arbeitsfläche gleichmäßig und blendfrei und mit im wesentlichen gleicher Intensität über den Tag hinweg beleuchtet werden.

Diese Aufgabe wird mit der Erfindung dadurch gelöst, daß das Lichtlenkelement eine langgestreckte dünne Platte von im wesentlichen gleichbleibender Dikke ist, deren einer ebener Längsrand die Einlaßfläche und deren anderer ebener Längsrand die Auslaßfläche für die Sonnenstrahlen bildet und daß das Lichtlenkelement ein gebogenes Mittelteil und mindestens ein geradliniges Endteil aufweist, deren einander gegenüberliegende Umfangsflächen Leitgrenzflächen bilden.

Diese Ausgestaltung hat den Vorteil, daß alle in das Lichtlenkelement geordnet eintretenden, parallelen Sonnenstrahlen aus dem Lichtlenkelement ungeordnet, d.h. nicht parallel, aber in weitgehend gleichmäßiger Verteilung austreten. Da in dem geradlinigen Endteil ein Teil der in dem gebogenen Mittelteil nach oben reflektierten Lichtstrahlen noch einmal nach unten reflektiert wird, werden die durch die Reflexion aufgefächerten Lichtstrahlen im Austrittswinkelbereich gleichmäßig verteilt, so daß ein begrenzter Bereich des Raumes bei hoher Lichtausbeute sehr gleichmäßig beleuchtet wird.

An den Leitgrenzflächen werden die aus dem gekrümmten Mittelteil kommenden Strahlen je nach ihrem Einfallswinkel totalreflektiert oder gebrochen. Die totalreflektierten Strahlen verbleiben im Lichtlenkelement und treten in einem begrenzten Winkelbereich aus der Auslaßfläche aus, während die gebrochenen Strahlen das Lichtlenkelement seitlich durch die Leitgrenzfläche verlassen.

Die Lichtlenkelemente können eine sehr geringe Länge von wenigen Millimetern haben und leicht zwischen den Glasplatten eines Isolierglasfensters untergebracht werden. Es gibt deshalb keine Reinigungsprobleme und die Vorrichtung nach der Erfindung bleibt immer wirksam.

Um aus der Auslaßfläche nur Strahlen in einem begrenzten Winkelbereich austreten zu lassen, ist es notwendig, das die Auslaßfläche tragende Endteil an seiner Umfangsfläche mit einer "Funktionsschicht" zu versehen. Diese "Funktionsschicht" besteht aus einem vorzugsweise glasklaren Material, dessen Brechzahl $n_K$ auf die Brechzahl $n_L$ des Lichtlenkmaterials derart abgestimmt ist, daß nur solche an der Leitgrenzfläche totalreflektierten Strahlen die Auslaßfläche verlassen, die in dem zu beleuchtenden Raum einen Lichtkegel bzw. ein Lichtprisma mit einem Öffnungswinkel β zwischen 60° und 72° erzeugen. Wird das die Auslaßfläche tragende Endteil so geneigt, daß die Unterkante dieses Lichtkegels oder Lichtprismas horizontal verläuft, wird nur der darüberliegende Raum nahezu vollständig mit blendfreiem Licht erfüllt.

Es ist zweckmäßig, auf der Außenseite der Funktionsschicht eine Absorptionsschicht anzuordnen, welche die an der Umfangsfläche aus dem Lichtlenkelement austretenden Sonnenstrahlen absorbiert. Hierdurch wird vermieden, daß Streulicht aus dem Lichtlenkelement austritt und in Raumabschnitte gelangt, in denen es eine Blendung der im Raum arbeitenden Personen bewirken würde.

Die Absorptionsschicht kann eine lichtundurchlässige Sperrschicht sein, sie kann aber auch als lichtdämpfende Schicht ausgebildet werden.

Für besondere Anwendungen kann die Absorptionsschicht auch eine mindestens teilweise lichtdurchlässige Farbschicht sein. Hierdurch wird erreicht, daß die Streustrahlung als farbiges Licht in den Raum gelangt, während das gegen die Decke oder einen Arbeitsplatz gerichtete Hauptlicht weiß bleibt.

Besonders zweckmäßig ist es, wenn die Funktionsschicht ein Klebstoff ist, mit dem mehrere Lichtlenkelemente miteinander oder mit einem Tragmittel verbindbar sind. Ein solches Tragmittel ist zweckmäßig eine lichtdurchlässige Folie, die beidseitig mit Klebstoff beschichtet ist und vollflächig auf den Umfangsflächen der miteinander zu verbindenden Lichtlenkelemente angebracht wird. Hierbei kann entweder der Klebstoff oder die Folie die Funktionsschicht sein, welche die vorstehend beschriebene Brechzahl $n_K$ hat.

Die Absorptionsschicht kann auch ein lichtundurchlässiges, flächenhaftes Tragmittel sein, welches auf zwei aneinander gegenüberliegenden Flächen einen die Fläche vollständig bedeckenden Klebstoff trägt, mit dem zwei benachbarte Lichtlenkelemente an mindestens einem ihrer Endteile miteinander verbunden sind. Durch das Verkleben mehrerer Lichtlenkelemente mit dazwischen angeordneten, lichtundurchlässigen Absorptionsschichten wird verhindert, daß die aus den einzelnen Lichtlenkelementen austretenden Sonnenstrahlen in benachbarte Lichtlenkelemente übertreten und eine Streustrahlung verursachen.

Eine noch bessere Lichtausbeute wird erzielt, wenn das Endteil des Lichtlenkelementes eine ebene Unterfläche und eine ebene Oberfläche aufweist und die ebene Unterfläche auf der Außenseite der Funktionsschicht eine Reflexionsschicht und die ebene Oberfläche auf der Außenseite der Funktionsschicht eine Absorptionsschicht aufweist. Die Reflexionsschicht kann mit einer in ihrem Querschnitt lichtdurchlässigen, jedoch auf der Außenseite mit Aluminium bedampften Kunststoffolie hergestellt werden, während die Absorptionsschicht von einer dünnen, lichtundurchlässigen Kunststoffolie gebildet wird. Beide Schichten werden mit Hilfe eines druckempfindlichen Kaltklebestoffes, der die Funktionsschicht bildet, blasenfrei auf die Oberfläche des Lichtlenkelementes aufgeklebt.

Das Lichtlenkelement aus lichtdurchlässigem Material kann aus Glas bestehen. Vorzugsweise besteht es jedoch aus einem thermoplastischen Kunststoff im Glaszustand, und zwar vorzugsweise aus Polycarbonat (PC), das eine Brechzahl von $n_L = 1,586$ hat. Werden mehrere Lichtlenkelemente aus Polycarbonat mit einem Adhäsionskleber auf Acrylbasis (Acrylat) verbunden, der die Wirkung der Funktionsschicht ausübt und eine Brechzahl von $n_k = 1,491$ hat, ergibt sich eine sehr große Apertur von $\pm\,32,7°$ an der Auslaßfläche der Lichtlenkelemente, wodurch auch die Deckenfläche eines sehr tiefen zu beleuchtenden Raumes vollständig angestrahlt werden kann.

Das Lichtlenkelement ist vorzugsweise eine langgestreckte, dünne Platte von im wesentlichen gleichbleibender Dicke, deren einer, ebener Längsrand die Einlaßfläche und deren anderer, ebener Längsrand die Auslaßfläche für die Sonnenstrahlen bildet und deren Mittelteil quer zu ihrer Längsachse gekrümmt ist und an das sich das geradlinige Endteil anschließt. Derartige, langgestreckte Lichtlenkelemente können auf praktisch ganzer Länge einer Raum-Umgebungswand eingebaut werden und ein durchgehendes Lichtband erzeugen, welches die größtmögliche Lichtmenge aufnimmt und an die bevorzugten Stellen des Raumes weiterleitet.

Damit praktisch das ganze Jahr über alles Sonnenlicht aufgenommen und zur Raumbeleuchtung eingesetzt werden kann, ist das Lichtlenkelement vorzugsweise derart gekrümmt und in die Raum-Umgebungsfläche eingebaut, daß das Einfallslot auf die Einlaßfläche mit der Horizontalen einen Winkel einschließt, der dem größtmöglichen Höhenwinkel der Sonne bei dem über das Jahr mittleren Sonnenstand am Einbauort entspricht. Gleichzeitig schließt das Ausfallslot auf die Auslaßfläche des Lichtlenkelementes mit der Horizontalen einen Winkel ein, der dem größtmöglichen halben Öffnungswinkel (Apertur) des aus der Auslaßfläche austretenden Strahlenbündels entspricht. Hierdurch können nicht nur die im Sommer bei hohem Sonnenstand, sondern auch die im Winter bei niedrigem Sonnenstand einfallenden Sonnenstrahlen zu jeder Tageszeit in das Lichtlenkelement eintreten, wo sie weitergeleitet und zerstreut werden. Beim Austritt der Lichtstrahlen aus der Auslaßfläche bleibt der volle Strahlenkegel in dem gewünschten, oberen Bereich des Raumes, da die Unterkante des Strahlenkegels mit der Horizontalen zusammenfällt.

Um eine ausreichende Lichtmenge in einen Raum zu leiten, werden zweckmäßig mehrere Lichtlenkelemente eingesetzt, die an mindestens einem ihrer Endteile dicht aneinanderliegen und im Bereich ihrer Leitgrenzflächen voneinander getrennt sind. Das Licht wird hierdurch von einem ganzen Stapel Lichtlenkelemente eingeleitet. Bei diesem Stapel sind die Leitgrenzflächen an den Endteilen von aneinander anliegenden Lichtlenkelementen durch beidseitig mit Klebstoff vollflächig beschichtete Absorptionsschichten und die Leitgrenzflächen an den Mittelteilen durch Luftspalte voneinander getrennt. Im Bereich der Mittelteile können die Lichtstrahlen dort nicht austreten, sondern werden vollständig totalreflektiert. Im Bereich der Endteile können einzelne Strahlen, die unter einem Winkel auf die Leitgrenzflächen auftreffen, der kleiner als der Grenzwinkel zwischen dem Material des Lichtlenkelementes und dem des Klebstoffes ist, aus dem Lichtlenkelement ausgeleitet werden. Sie verschwinden dann in der Absorptionsschicht und können hierdurch kein Streulicht erzeugen. Bei dieser Ausgestaltung können auch alle Lichtlenkplatten gleich dick sein und die gleiche Form haben, so daß eine wirtschaftliche Produktion möglich ist.

Damit viele Lichtlenkelemente zusammengefaßt und präzise übereinander gestapelt werden können, haben die Lichtlenkelemente an ihren die Einlaßfläche tragenden Endteilen rechtwinklig abstehende Nasen, mit denen aneinander anliegende Lichtlenkelemente übereinandergreifen. Hierdurch justieren sich die Lichtlenkelemente beim Aufbau des Stapels von selbst, und es ergibt sich ein exakter Aufbau der Vorrichtung, der eine optimale Lichtausbeute gewährleistet.

Ein Stapel von mehreren, aneinander anliegenden und ggf. miteinander verklebten Lichtlenkelementen kann zwischen zwei lichtdurchlässigen Scheiben eines Fensters derart angeordnet werden, daß die Auslaßflächen der Lichtlenkelemente gegen die zu beleuchtende Stelle des Raumes gerichtet sind. Für eine vollständige Raumbeleuchtung kann der Stapel im oberen Teil eines Fensters angeordnet werden, dessen unterer Teil bei direkter Sonneneinstrahlung abgedunkelt wird. Für die Beleuchtung eines einzelnen Arbeitsplatzes kann der Lichtlenkelement-Stapel in einem Oberlicht oder Deckenfenster angeordnet werden, so daß das Licht nach unten auf einen Arbeitsplatz fällt.

Durch Einbau eines Stapels von Lichtlenkelementen zwischen die Scheiben eines Fensters, beispielsweise eines Fensters mit Isolierverglasung, sind die Lichtlenkelemente vor Verschmutzung, UV-Bestrahlung und atmosphärischen Einflüssen geschützt, was sich positiv auf die Funktionssicherheit und die Gebrauchsdauer der Lichtlenkelemente auswirkt.

Um unterschiedliche Helligkeiten an verschiedenen Stellen des Raumes während eines Tageslaufes zu vermeiden, kann an der Auslaßfläche des Lichtlenkelementes ein Lichtstreumittel zur gleichmäßigen Verteilung der sich über den Verlauf eines Tages ändernden Richtung der ausfallenden Sonnenstrahlen vorgesehen sein. Hierbei ist zweckmäßig die Auslaßfläche des Lichtlenkelementes selbst als Lichtstreumittel ausgebildet. Es kann aber auch in Strahlenrichtung hinter der Auslaßfläche des Lichtlenkelementes eine profilierte Streuscheibe aus lichtdurchlässigem Material angeordnet sein.

Besonders zweckmäßig ist es, wenn das Lichtstreumittel auf seiner Strahlenaustrittsseite eine Sinus-Wellenfläche mit geradlinigen, parallelen Wellen aufweist, deren Wellenlänge $\underline{g}$ etwa dem 3,64-fachen der Amplitude $\underline{a}_0$ entspricht und deren Wellenscheitel senkrecht zu den Längsrändern des Lichtlenkelementes verlaufen. Bei einer solchen Ausbildung des Lichtstreumittels wird eine besonders gleichmäßige Verteilung des eingestrahlten Lichtes über den ganzen Tag erreicht.

Weitere Merkmale und Vorteile der Erfindung ergeben sich aus der nachfolgenden Beschreibung und den Zeichnungen, in denen bevorzugte Ausführungsformen der Erfindung an Beispielen näher erläutert sind. Es zeigt:

Fig. 1 einen mit einer Vorrichtung nach der Erfindung gleichmäßig zu beleuchtenden Raum in schematischer Darstellung im Querschnitt;

Fig. 2 die Vorrichtung nach der Erfindung in einem Ausschnitt II der Fig. 1 in einer stark vergrößerten Darstellung;

Fig. 3 eines der in Fig. 2 dargestellten Lichtlenkelemente des Teilstapels in einem senkrechten Querschnitt, in dem der Strahlengang von unter einem Höhenwinkel von 20° einfallenden Sonnenstrahlen dargestellt ist in einem gegenüber Fig. 2 weiter vergrößerten Maßstab;

Fig. 4 zwei übereinander gestapelte Lichtlenkelemente mit Lichtstreumitteln an ihrer Auslaßfläche, in einem senkrechten Querschnitt;

Fig. 5 den Gegenstand der Fig. 4 in einer Teildraufsicht;

Fig. 6 einen mit einem Dachfenster oder Oberlicht versehenen Raum, bei dem eine Fußbodenfläche von einer in das Dachfenster eingebauten Vorrichtung nach der Erfindung beleuchtet wird, in einem vertikalen Teilschnitt und

Fig. 7 eine Einzelheit VII der Fig. 6 in einem stark vergrößerten Maßstab.

An der Südseite eines mit Sonnenlicht zu beleuchtenden Raumes 10 ist in einer Raum-Umgebungsfläche, beispielsweise einer Außenwand 11, ein Fenster 12 angeordnet, das sich über einen Teil oder über die ganze Länge des Raumes 10 erstrecken kann. Das Fenster ist ein Isolierglasfenster, dessen unterer Teil 12a aus zwei im seitlichen Abstand voneinander angeordneten lichtdurchlässigen Scheiben 13 und 14 besteht, vor denen außenseitig eine Jalousie 15 angeordnet ist, mit der der untere Teil 12a des Fensters 12 bei Sonnenschein abgedunkelt wird, die aber bis zum mittleren Rahmenholm 16 des Fensters 12 hochgezogen werden kann, wenn bei bedecktem Himmel Tageslicht auch durch den unteren Teil 12a des Fensters 12 eintreten soll.

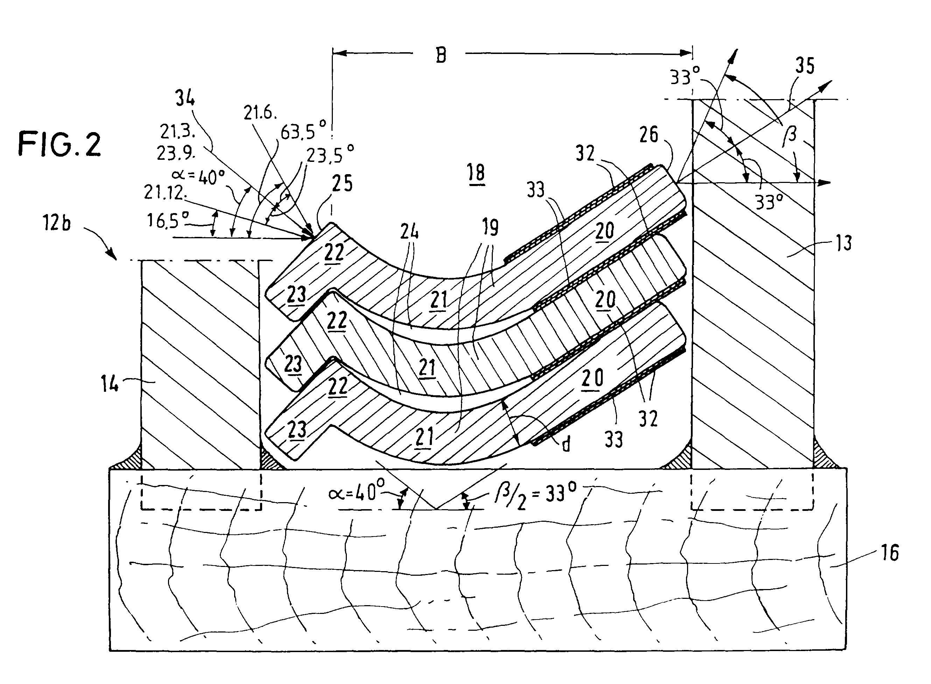

Der obere Teil 12b des Fensters 12 enthält zwischen dem mittleren Rahmenholm 16 und dem oberen Rahmenholm 17 ebenfalls eine Isolierverglasung mit einer inneren Scheibe 13 und einer äußeren Scheibe 14, die bei dem dargestellten Ausführungsbeispiel einen Abstand von ungefähr 10mm haben, so daß sich zwischen den zwei lichtdurchlässigen Scheiben 13 und 14 ein Luftraum 18 ergibt. In diesem Luftraum 18 ist ein Stapel von mehreren, aneinander anliegenden Lichtlenkelementen 19 angeordnet, die sich über die ganze Länge des Fensters 12 erstrecken und im Querschnitt die in Fig. 2 dargestellte Form haben.

Die Lichtlenkelemente 19 bestehen aus einem festen lichtdurchlässigen Material und zwar bei der dargestellten Ausführungsform aus einem lichtdurchlässigen, thermoplastischen Kunststoff im Glaszustand, nämlich aus Polycarbonat (PC), das eine optische Brechzahl von nL = 1,586 hat.

Wie man aus Fig. 2 erkennt, sind die Lichtlenkelemente 19 langgestreckte, dünne Platten, die auf ihrer ganzen Breite $\underline{B}$ eine im wesentlichen gleichbleibende Dicke $\underline{d}$ haben. Jedes Lichtlenkelement 19 besteht aus einem im wesentlichen geradlinigen, inneren Endteil 20, aus einem quer zur Längsachse des Lichtlenkelementes gekrümmten Mittelteil 21 und aus einem äußeren Endteil 22, der eine rechtwinklig abstehende Nase 23 aufweist. Die Lichtlenkelemente 19 liegen mit ihren Endteilen 20 bzw. 22 formschlüssig aufeinander, wobei sie mit ihren Nasen 23 einander übergreifen. Da die Krümmung der Mittelteile 21 an der Oberseite der Lichtlenkelemente 19 stärker ist als an der Unterseite, bilden sich zwischen den übereinander gestapelten Lichtlenkelementen 19 im Bereich ihrer Mittelteile 21 Luftspalte 24.

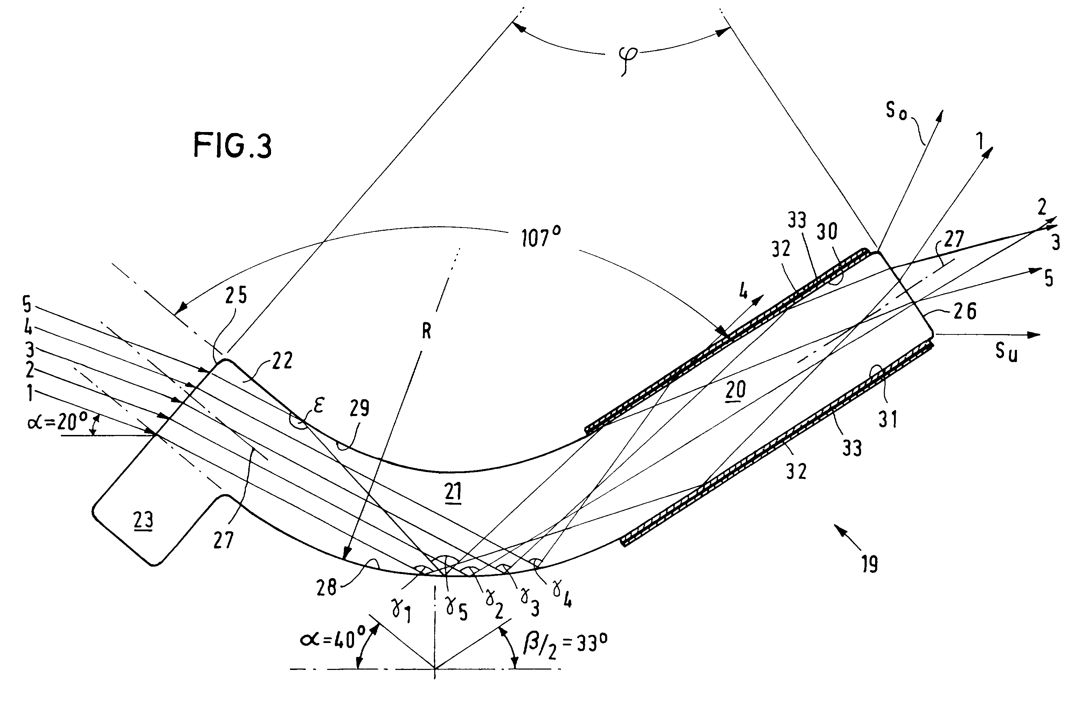

Wie mehr im einzelnen aus Fig. 3 hervorgeht, trägt das äußere Endteil 22 eine Einlaßfläche 25 für die Sonnenstrahlen, die in parallelen Ebenen einfallen und von denen einige in Fig. 3 herausgegriffen und mit den Ziffern 1, 2, 3, 4 und 5 bezeichnet sind. Das geradlinige, innere Endteil 20 trägt an seinem Ende eine Auslaßfläche 26.

Da die Endteile 20 und 22 durch das gekrümmte Mittelteil 21 miteinander verbunden sind, schließen die zu der Längsmittelfläche 27 des Lichtlenkelementes 19 senkrechte Einlaßfläche 25 und die Auslaßfläche 26 einen Winkel φ miteinander ein, der von der geographischen Breite des Einbauortes abhängig ist und bei dem hier dargestellten Ausführungsbeispiel etwa 73° beträgt.

Man erkennt aus dem in Fig. 3 dargestellten Strahlengang der in parallelen Ebenen einfallenden Sonnenstrahlen 1, 2, 3, 4 und 5, daß diese unter einem angenommenen Höheneinfallwinkel $\alpha = 20°$ zur Horizontalen auf die Einlaßfläche 25 des Lichtlenkelementes 19 auftreffen und von dort im Inneren des aus Polycarbonat bestehenden Lichtlenkelementes 19 weiterlaufen. Hierbei werden sie an der Grenzfläche 25 zwischen Luft und Polycarbonat zum Einfallslot hin gebrochen und treffen im Bereich des Mittelteiles 21 auf dessen gekrümmte, untere Umfangsfläche 28, die im folgenden auch als "Leitgrenzfläche" bezeichnet wird. An dieser Grenzfläche zwischen dem optischen dichteren Material des Lichtlenkelementes 19 und dem Luftspalt 24 wird jeder auftreffende Sonnenstrahl 1, 2, 3, 4 unter einem anderen Winkel $\gamma_1$, $\gamma_2$, $\gamma_3$ und $\gamma_4$ totalreflektiert, da die in übereinanderliegenden, parallelen Ebenen eintretenden Lichtstrahlen 1, 2, 3, 4 an nebeneinanderliegenden Stellen unter verschiedenen Winkeln auf die Leitgrenzfläche 28 auftreffen.

Während die Sonnenstrahlen 1 bis 4 nach ihrem Eintritt in das Lichtlenkelement 19 geradlinig bis zur unteren Umfangsfläche 28 laufen, treffen die in der obersten Ebene einfallenden Sonnenstrahlen 5 nach ihrem Eintritt in das Lichtlenkelement 19 zunächst auf die obere Umfangsfläche 29, wo sie unter einem Winkel $\varepsilon$ reflektiert und zur gegenüberliegenden, unteren Umfangsfläche 28 geführt werden, an der sie abermals unter einem Winkel von $\gamma_5$ ebenso totalreflektiert werden, wie die übrigen Sonnenstrahlen, die unmittelbar von der Einlaßfläche 25 zur unteren Umfangsfläche 28 gelaufen sind.

Man erkennt, daß es vorteilhaft ist, wenn der Krümmungsradius R der unteren Umfangsfläche 28, an der die Sonnenstrahlen im Inneren des Lichtlenkelementes reflektiert werden, möglichst groß ist. Im vorliegenden Fall ist der Mittelteil 21 nach einem Kreisbogen gekrümmt und schließt tangential an die Endteile 20 und 22 an. Der Mittelteil könnte aber auch nach einer anderen Kurve gekrümmt sein.

Wie aus Fig. 3 hervorgeht, werden die an der Leitgrenzfläche 28 reflektierten Strahlen 1, 2, 3, 4 und 5 in den geradlinigen, inneren Endteil 20 weitergeleitet, wo sie auf eine ebene Oberfläche 30 oder auf eine ebene Unterfläche 31 treffen, die ebenfalls "Leitgrenzflächen" sind. Im Gegensatz zum Mittelteil 21, in dem alle Strahlen 1 bis 5 reflektiert und hierdurch umgelenkt und weitergeleitet werden, werden im Bereich des geradlinigen, inneren Endteiles 20 nur solche Strahlen 1, 2, 3 und 5 reflektiert und weitergeleitet, die unter einem Winkel auf die Leitgrenzflächen 30 und 31 auftreffen, der größer als der Grenzwinkel der Totalreflektion ist. Strahlen, die mit einem kleineren Winkel auf die ebenen Leitgrenzflächen 30 und 31 auftreffen, wie beispielsweise der Strahl 4, werden nicht reflektiert, sondern treten seitlich aus dem Lichtlenkelement aus und sind verloren.

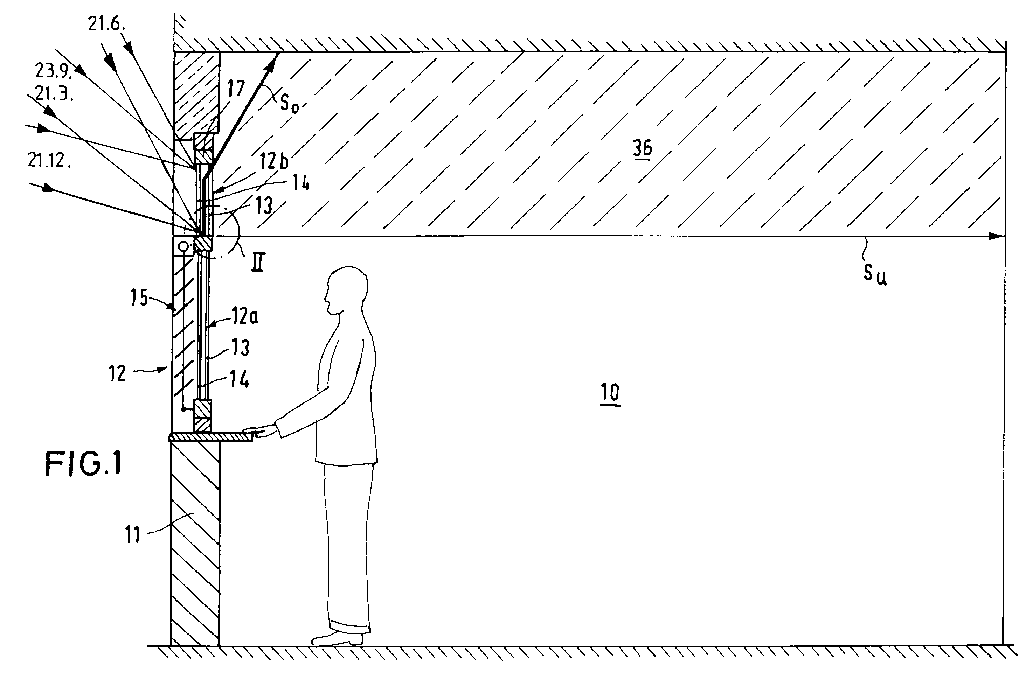

Da nach der Erfindung die einfallenden Sonnenstrahlen nur in einen ganz bestimmten Teil des Raumes 10 geleitet werden sollen, nämlich bei dem in Fig. 1 dargestellten Ausführungsbeispiel nur in das obere Drittel des Raumes, in dem dort arbeitende Menschen nicht geblendet werden können, und weil in dieses obere Drittel möglichst viel Licht eintreten und dort von der Decke und den Umfangswänden des Raumes in dessen unteren Teil diffus reflektiert werden soll, müssen die Sonnenstrahlen an der Auslaßfläche 26 in einem möglichst großen Strahlenkegel austreten. Ideal wäre ein Austrittswinkel β von 90°, der jedoch nur mit hohen Lichtverlusten an den ebenen Leitgrenzflächen 30 und 31 zu erreichen ist. Sollen Lichtverluste weitgehend vermieden werden und sollen die untersten Sonnenstrahlen $S_u$ des Strahlenprismas im Raum horizontal verlaufen, muß das geradlinige Endteil 20 des Lichtlenkelementes unter dem Winkel β/2 gegen die Horizontale so geneigt sein, daß der Öffnungswinkel β zwischen 60° und 72° liegt. Um eine solche Apertur herzustellen, ist es erforderlich, die Leitgrenzflächen 30 und 31 des geradlinigen, inneren Endteiles 20 des Lichtlenkelementes 19 mit einer "Funktionsschicht" zu versehen, deren Brechzahl $n_K$ auf die Brechzahl $n_L$ des Materials des Lichtlenkelementes 19 so abgestimmt ist, daß nur solche Strahlen an der jeweiligen Leitgrenzfläche 30 bzw. 31 reflektiert werden, welche die Auslaßfläche 26 in einem Lichtkegel bzw. einem Lichtprisma verlassen, das einen Öffnungswinkel von β = 66° hat. Nach der Erfindung gelingt es, einen solchen Öffnungswinkel dann zu erreichen, wenn die "Funktionsschicht" eine Brechzahl $n_K = 1{,}491$ aufweist. Die "Funktionsschicht" an den Leitgrenzflächen 30 und 31 kann also nicht Luft sein.

Wie bereits oben erwähnt, liegen die übereinander gestapelten Lichtlenkelemente 19 mit ihren Endteilen 20 aufeinander. Sie sind hierbei mit einem Klebstoff 32 verbunden, der die "Funktionsschicht" bildet und sich zwischen den ebenen Oberflächen 30 und Unterflächen 31 der Endteile befindet und ein Adhäsionskleber auf Acrylbasis (Acrylat) ist. Dieser Klebstoff 32 hat eine optische Brechzahl $n_K = 1{,}491$ und befindet sich auf einem lichtundurchlässigen, flächenhaften Tragmittel 33, beispielsweise einer dünnen, schwarzen Kunststoffolie. Diese schwarze Kunststoffolie bildet eine Absorptionsschicht, in der aus dem inneren Endteil 20 an deren Leitgrenzflächen 30 und 31 ausgekoppelte Lichtstrahlen 4 absorbiert werden, so daß sie nicht vagabundieren und nicht in benachbarte Lichtlenkelemente eintreten können.

Man erkennt, daß sich für alle Lichtstrahlen 1, 2, 3 und 5, die an den Leitgrenzflächen 30 und 31 reflektiert werden und die Auslaßfläche 26 erreichen, eine numerische Apertur NA = sin β/2

$$NA = \sqrt{n_L{}^2 - n_K{}^2} = 0{,}54$$

ergibt, die einem Öffnungswinkel von $\beta \cong 2 \cdot 33° \cong 66°$ entspricht.

Um zu erreichen, daß, wie in Fig. 1 dargestellt, Sonnenstrahlen nur das obere Drittel des Raumes 10 erreichen, müssen die untersten Sonnenstrahlen $s_U$ des aus der Auslaßfläche 26 des untersten Lichtlenkelementes 19 austretenden Strahlenprismas horizontal verlaufen. Die obersten Strahlen $S_O$ des aus der Auslaßfläche 26 des im Stapel obersten Lichtlenkelementen 19 austretenden Strahlenprismas erreichen dann die Decke des Raumes unter einem Winkel von 66° zur Horizontalen, so daß nahezu die gesamte Deckenfläche des Raumes 10 angestrahlt wird.

Nach der Erfindung wird der Winkel $\alpha$ des Einfallslotes 34 auf die Einlaßfläche 25 für den jeweiligen Einbauort nach dem höchsten Sonnenstand im Jahresmittel festgelegt, also nach dem höchsten Höhenwinkel der Sonne am 21. März oder 23. September, der am 50. Breitengrad (z.B. in der Stadt Mainz) 40° beträgt (Fig. 1 und 2). Am 21. Juni ist dieser höchste Höhenwinkel der Sonne um 23,5° höher und am 21. Dezember um 23,5° niedriger. Hieraus ergibt sich, daß die höchsten Sonnenstände im Jahr in einem Winkelbereich von 47° schwanken und am 50. Breitengrad im Tagesverlauf, von der Horizontalen am Morgen beginnend, einen Höhenwinkel von 63,5° mittags erreichen können. Da das Sonnenlicht am 50. Breitengrad über das Jahr seine größten, für die indirekte Raumbeleuchtung nutzbaren Lichtstärken im vertikalen Winkelbereich zwischen 16,5° und 63,5° aufweist, wird das äußere Endteil 22 des Lichtlenkelementes 19 unter einem Winkel von 40° zur Horizontalen angeordnet, der den gesamten Höhenwinkelbereich halbiert.

Dieser Winkel muß natürlich bei Einbauorten anderer geographischer Breite anders sein, wenn auch dort über den ganzen Jahreslauf der maximale Lichteinfall ausgenutzt werden soll.

Man erkennt, daß es mit der beschriebenen Ausbildung und Anordnung der Lichtlenkelemente 19 möglich ist, das ganze Jahr hindurch die größtmögliche Lichtmenge einzufangen, die parallel in den äußeren Endteil 22 einfallenden Sonnenstrahlen durch mehrfache Totalreflektion im gebogenen Mittelteil 21 und gradlinigen Endteil 20 zu zerstreuen und in zerstreuter Form, aber in gleichmäßiger Verteilung an eine bestimmte Stelle 36 eines Raumes 10 zu leiten und hierdurch den ganzen Raum mit blendfreiem, diffusem Licht zu erfüllen. Man erkennt auch, daß die Lichtlenkelemente 19 leicht einzeln hergestellt und sicher übereinandergestapelt und verklebt im Luftraum 18 eines Isolierglasfensters untergebracht werden können, wo sie Umwelteinflüssen und der Verschmutzung entzogen sind, so daß ihre Wirksamkeit auch bei längerer Gebrauchsdauer nicht beeinträchtigt wird.

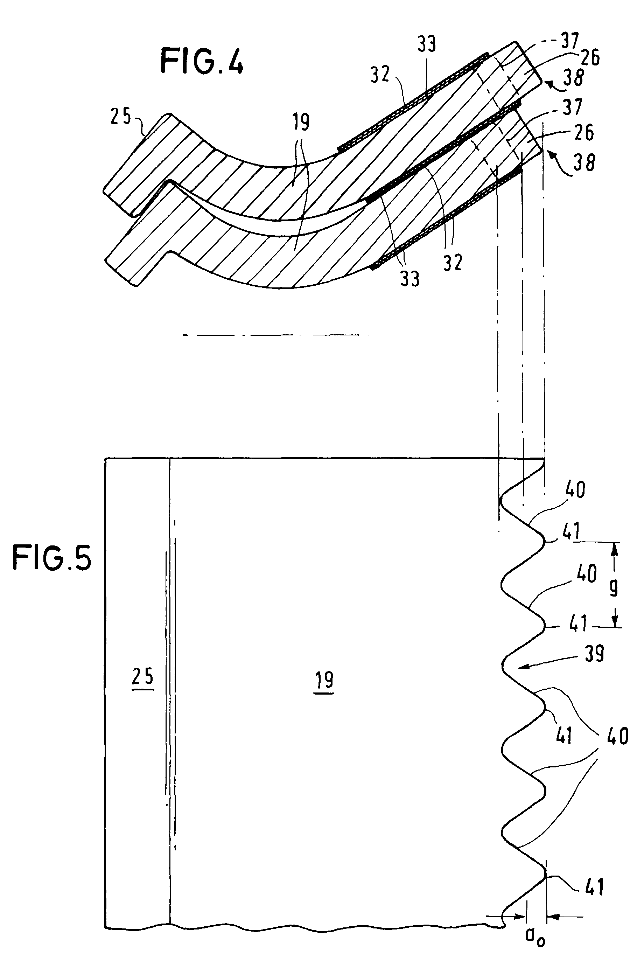

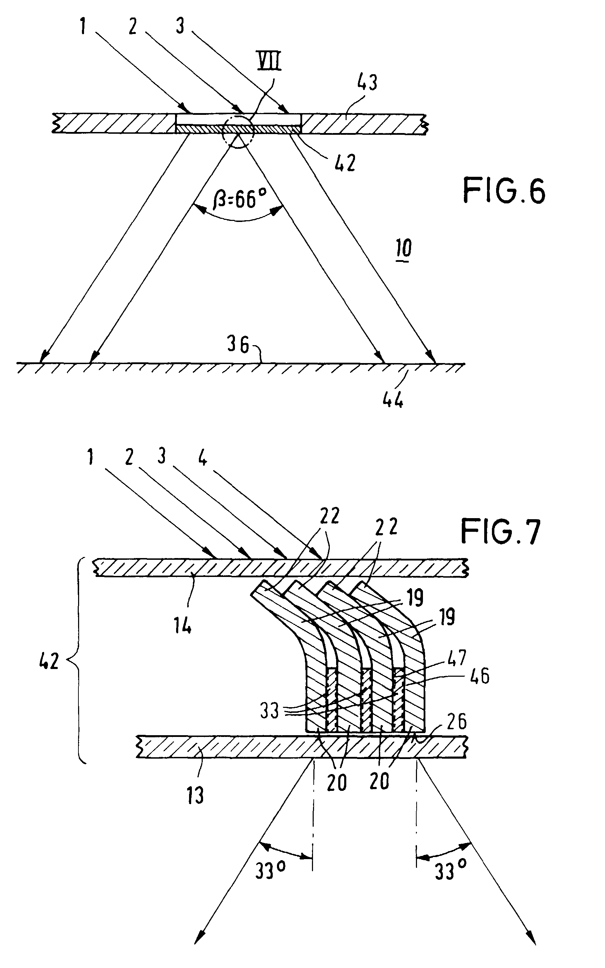

Um eine gleichmäßige Ausleuchtung des Raumes 10 auch über den Lauf eines Tages zu erreichen und der Wanderung der Sonne in horizontaler Richtung von Ost über Süd nach West Rechnung zu tragen, kann bei der in den Fig. 4 und 5 dargestellten Ausführungsform an der Auslaßfläche 26 der Lichtlenkelemente 19 ein Lichtstreumittel 37 vorgesehen sein, mit dem die über den Lauf eines Tages in verschiedener Richtung einfallenden Sonnenstrahlen gleichmäßiger verteilt werden. Dieses Lichtstreumittel 37 fächert die parallel einfallenden Sonnenstrahlen in der Horizontalen auf und lenkt sie zur Raummitte hin. Es wird bei der Ausführungsform nach den Fig. 4 und 5 von der Auslaßfläche 26 selbst gebildet, wobei der innere Längsrand 38 der Lichtlenkelemente 19 als Sinus-Wellenfläche 39 ausgebildet wird, die geradlinige, parallele Wellen 40 aufweist, deren Wellenscheitel 41 senkrecht zu den Längsrändern 38 des Lichtlenkelementes 19 verlaufen. Die Wellenlänge $\underline{g}$ der Sinus-Welle entspricht etwa dem 3,64-fachen der Amplitude $a_o$.

Durch eine derartige Wellenprofilierung der Auslaßflächen 26 werden die am Vormittag und am Nachmittag schräg einfallenden Sonnenstrahlen zur Raummitte hingelenkt. Hierdurch wird eine gleichmäßige Ausleuchtung des Raumes 10 über seine ganze Länge erreicht.

Den gleichen Effekt kann man auch erreichen, wenn in Strahlrichtung hinter der Auslaßfläche 26 des Lichtlenkelementes 19 eine profilierte Streuscheibe aus lichtdurchlässigem Material angeordnet wird. Eine solche Ausführungsform ist in den Zeichnungen jedoch nicht dargestellt.

In den Fig. 6 und 7 ist eine andere Ausführungsform der Erfindung dargestellt, bei der Lichtlenkelemente 19 zwischen zwei Glasscheiben 13 und 14 eines Dachfensters 42 angeordnet sind. Diese Elemente lenken die auf ein Flachdach 43 fallenden Sonnenstrahlen 1, 2, 3 auf eine Stelle 36 am Boden 44 einer Fabrikhalle 45, um dort eine gleichmäßige Beleuchtung über den ganzen Tag zu erzielen.

Bei dieser Ausführungsform werden die inneren Endteile 20 der Lichtlenkelemente 19 mit ihren Auslaßflächen 26 unmittelbar oberhalb der inneren Glasscheibe 13 des Dachfensters 42 angeordnet, wobei die ebenfalls geradlinigen, langgestreckten äußeren Endteile 22 der Lichtlenkelemente 19 aneinander anliegen. Bei dieser Ausführungsform haben die inneren Endteile 20 einen etwas größeren Abstand voneinander, und es ist erforderlich, zwischen ihnen lichtabsorbierende, flächenhafte Tragplatten 33 anzuordnen, die auf ihren einander gegenüberliegenden Flächen 46 und 47 einen die "Funktionschicht" bildenden Klebstoff 42 tragen, mit dessen Hilfe sie mit den Endteilen 20 der Lichtlenkelemente verbunden werden können. Sonnenstrahlen, die unter einem Winkel auf die Leitgrenzflächen auftreffen, der kleiner ist als der Grenzwinkel der Totalreflektion, werden, wie weiter oben beschrieben, in die Absorptionsplatten 33 gelenkt und dort absorbiert, während die mehrfach reflektierten, aus der Auslaßfläche 26 austretenden Lichtstrahlen in einem Lichtkegel mit einer Öffnungsweite von 66° auf den Boden 36 der Fabrikhalle geleitet werden.

Die Erfindung ist nicht auf die dargestellten und beschriebenen Ausführungsbeispiele beschränkt, sondern es sind mehrere Änderungen und Ergänzungen möglich, ohne den Rahmen der Erfindung zu verlassen. Beispielsweise ist es auch möglich, Lichtlenkelemente nach der Erfindung fest in eine Mauer einzubauen, wenn keine besonderen Fenster vorgesehen sind. Ferner können die Lichtlenkelemente nach der Erfindung nicht nur in Flachdächern, sondern auch in Shed-Dächern eingebaut werden, und es ist auch möglich, die Lichtlenkelemente anders zu gestalten, beispielsweise dem Mittelteil eine andere Krümmung zu geben und den Winkel zwischen Einlaßfläche und Auslaßfläche zu verändern, um die Lichtlenkelemente dem jeweiligen Einbauort, d.h. der jeweiligen geographischen Breite und deren Sonnengang anzupassen. Schließlich können auch andere feste, lichtdurchlässige Materialien wie Glas oder glasähnliche Kunststoffe und hierzu geeignete Funktionsschichten verwendet werden, soweit deren Lichtbrechungszahlen günstig aufeinander abgestimmt werden können. Um die Lichtausbeute zu vergrößern, ist es auch möglich, mindestens die geradlinigen, inneren Endteile 20 der Lichtlenkelemente 19 an ihren ebenen Unterflächen mit einer Reflexionsschicht zu versehen, beispielsweise mit einer auf der Außenseite bedampften Kunststoffolie und nur an der ebenen Oberfläche des inneren Endteiles 20 eine Absorptionsschicht vorzusehen. Hierdurch wird sichergestellt, daß jedenfalls an der unteren Leitgrenzfläche keine Lichtstrahlen austreten können, sondern daß dort auch unter einem steileren Winkel auftreffende Strahlen zur oberen Leitgrenzfläche reflektiert werden.

**Patentansprüche**

1. Vorrichtung zum Versorgen eines Raumes (10) mit blendfreiem, diffusem Sonnenlicht, mit mindestens einem in einer der Sonne zugekehrten Raum-Umgebungsfläche (11) anzuordnenden, gebogenen Lichtlenkelement (19) aus lichtdurchlässigem Material, das eine Einlaßfläche (25), eine Auslaßfläche (26) und mindestens eine Leitgrenzfläche (28 bis 31) für Sonnenstrahlen (1 bis 5) aufweist und derart ausgebildet ist, daß es die auf die Einlaßfläche (25) auftreffenden Sonnenstrahlen (1 bis 5) zerstreut und auf eine bestimmte Stelle des Raumes (10) lenkt, wobei die Einlaßfläche (25) und die Auslaßfläche (26) des Lichtlenkelementes (19) unter einem Winkel (φ) zueinander angeordnet sind, **dadurch gekennzeichnet, daß** das Lichtlenkelement (19) eine langgestreckte dünne Platte von im wesentlichen gleichbleibender Dicke (d) ist, deren einer ebener Längsrand die Einlaßfläche (25) und deren anderer ebener Längsrand (38) die Auslaßfläche (26) für die Sonnenstrahlen (1,2,3,5) bildet und daß das Lichtlenkelement (19) ein gebogenes Mittelteil (21) und mindestens ein geradliniges Endteil (20) aufweist, deren einander gegenüberliegende Umfangsflächen Leitgrenzflächen (28, 29, 30, 31) bilden.

2. Vorrichtung nach Anspruch 1, **dadurch gekennzeichnet, daß** das die Auslaßfläche (26) tragende Endteil (20) an seinen Umfangsflächen (30, 31) eine Funktionsschicht aufweist, deren Brechzahl ($n_K$) auf die Brechzahl ($n_L$) des Materials des Lichtlenkelementes (19) derart abgestimmt ist, daß nur solche an der Leitgrenzfläche (30 bzw. 31) totalreflektierten Strahlen (1, 3, 5) die Auslaßfläche (26) verlassen, die in dem zu beleuchtenden Raum (10) einen Lichtkegel bzw. ein Lichtprisma mit einem Öffnungswinkel (β) zwischen 60° und 72° erzeugen.

3. Vorrichtung nach Anspruch 2, **dadurch gekennzeichnet, daß** auf der Außenseite der Funktionsschicht eine Absorptionsschicht angeordnet ist, welche die an der Umfangsfläche (30 bzw. 31) des Endteiles (20) austretenden Sonnenstrahlen (4) absorbiert.

4. Vorrichtung nach Anspruch 3, **dadurch gekennzeichnet, daß** die Absorptionsschicht eine lichtundurchlässige Sperrschicht ist.

5. Vorrichtung nach Anspruch 3, **dadurch gekennzeichnet , daß** die Absorptionsschicht eine lichtdämpfende Schicht ist.

6. Vorrichtung nach einem der Ansprüche 3 oder 5, **dadurch gekennzeichnet, daß** die Absorptionsschicht eine mindestens teilweise lichtdurchlässige Farbschicht ist.

7. Vorrichtung nach einem der Ansprüche 2 bis 6, **dadurch gekennzeichnet , daß** die Funktionsschicht ein Klebstoff (32) ist, mit dem mehrere Lichtlenkelemente (19) miteinander oder mit einem Tragmittel (33) verbindbar sind.

8. Vorrichtung nach Anspruch 7, **dadurch gekennzeichnet, daß** das Tragmittel (33) eine lichtdurchlässige Folie ist, die beidseitig mit Klebstoff (32) beschichtet ist, wobei entweder der Klebstoff (32) oder die Folie die Funktionsschicht ist, welche die Brechzahl ($n_K$) hat.

9. Vorrichtung nach einem der Ansprüche 2 bis 8, **dadurch gekennzeichnet, daß** das Endteil (20) des Lichtlenkelementes (19) eine ebene Unterfläche (31) und eine ebene Oberfläche (30)) aufweist und daß die ebene Unterfläche (31) auf der Außenseite der Funktionsschicht eine Reflexionsschicht und die ebene Oberfläche (30) auf der Außenseite der Funktionsschicht eine Absorptionsschicht aufweist.

10. Vorrichtung nach einem der Ansprüche 3 bis 9, **dadurch gekennzeichnet, daß** die Absorptionsschicht ein lichtundurchlässiges, flächenhaftes Tragmittel (33) ist, welches auf zwei einander gegenüberliegenden Flächen (46, 47) einen Klebstoff (32) trägt, mit dem zwei benachbarte Lichtlenkelemente (19) an mindestens einem ihrer Endteile (20) miteinander verbunden sind.

11. Vorrichtung nach einem der Ansprüche 9 oder 10, **dadurch gekennzeichnet, daß** die Reflexionsschicht eine lichtdurchlässige, auf ihrer dem Lichtlenkelement abgewandten Seite mit Aluminium bedampfte Kunststoffolie ist.

12. Vorrichtung nach einem der Ansprüche 1 bis 11, **dadurch gekennzeichnet, daß** das Lichtlenkelement (19) aus einem thermoplastischen Kunststoff im Glaszustand besteht.

13. Vorrichtung nach einem der Ansprüche 1 bis 12, **dadurch gekennzeichnet, daß** das Lichtlenkelement (19) aus Polycarbonat besteht.

14. Vorrichtung nach einem der Ansprüche 7 bis 13, **dadurch gekennzeichnet, daß** der Klebstoff (32) ein Adhäsionskleber auf Acryl-Basis (Acrylat) ist.

15. Vorrichtung nach einem der Ansprüche 1 bis 14, **dadurch gekennzeichnet, daß** das Lichtlenkelement (19) derart gekrümmt und in die Raum-Umgebungsfläche (11) eingebaut ist, daß das Einfallslot (34) auf die Einlaßfläche (25) mit der Horizontalen einen Winkel ($\alpha$) einschließt, der dem größtmöglichen Höhenwinkel der Sonne bei dem über das Jahr mittleren Sonnenstand am Einbauort entspricht und daß das Ausfallslot (35) auf die Auslaßfläche (26) des Lichtlenkelementes (19) mit der Horizontalen einen Winkel ($\beta/2$) einschließt, der dem größtmöglichen halben Öffnungswinkel ($\beta/2$=Apertur) des aus der Auslaßfläche (26) austretenden Strahlenbündels entspricht.

16. Vorrichtung nach einem der Ansprüche 1 bis 15, **gekennzeichnet durch** mehrere Lichtlenkelemente (19), die an mindestens einem ihrer Endteile (20, 22) dicht aneinanderliegen und im Bereich ihrer Leitgrenzflächen (28, 29, 30, 31) voneinander getrennt sind.

17. Vorrichtung nach einem der Ansprüche 1 bis 16, **dadurch gekennzeichnet, daß** die Leitgrenzflächen (30, 31) an den Endteilen (20) von aneinanderliegenden Lichtlenkelementen (19) durch beidseits vollflächig mit Klebstoff (32) beschichtete Absorptionsschichten und die Leitgrenzflächen (28, 29) an den Mittelteilen (21) durch Luftspalte (24) voneinander getrennt sind.

18. Vorrichtung nach einem der Ansprüche 1 bis 17, **dadurch gekennzeichnet, daß** die Lichtlenkelemente (19) an ihren die Einlaßflächen (25) tragenden Endteilen (22) rechtwinklig abstehende Nasen (23) aufweisen, mit denen aneinanderanliegende Lichtlenkelemente (19) übereinandergreifen.

19. Vorrichtung nach einem der Ansprüche 1 bis 18, **dadurch gekennzeichnet, daß** ein Stapel von mehreren aneinanderanliegenden und gfls. miteinander verklebten Lichtlenkelementen (19) zwischen zwei lichtdurchlässigen Scheiben (13, 14) eines Fensters (12; 42) derart angeordnet sind, daß die Auslaßflächen (26) der Lichtlenkelemente (19) gegen die zu beleuchtende Stelle (36; 44) des Raumes (10) gerichtet sind.

20. Vorrichtung nach einem der Ansprüche 1 bis 19 **dadurch gekennzeichnet,** daß ein Stapel von aneinanderanliegenden Lichtlenkelementen (19) zwischen zwei Scheiben (13, 14) eines Isolierglasfensters (12) fest angeordnet ist.

21. Vorrichtung nach einem der Ansprüche 1 bis 20, **dadurch gekennzeichnet, daß** an der Auslaßfläche (26) des Lichtlenkelementes (19) ein Lichtstreumittel (37) zur gleichmäßigen Verteilung der sich über den Verlauf eines Tages ändernden Richtung der ausfallenden Sonnenstrahlen (1 bis 5) vorgesehen ist.

22. Vorrichtung nach einem der Ansprüche 1 bis 21, **dadurch gekennzeichnet,** daß die Auslaßfläche (26) des Lichtlenkelementes (19) selbst als Lichtstreumittel (37) ausgebildet ist.

23. Vorrichtung nach einem der Ansprüche 1 bis 22, **dadurch gekennzeichnet, daß** in Strahlenrichtung hinter der Auslaßfläche des Lichtlenkelementes eine profilierte Streuscheibe aus lichtdurchlässigem Material angeordnet ist.

24. Vorrichtung nach einem der Ansprüche 1 bis 23, **dadurch gekennzeichnet, daß** das Lichtstreumittel (37) auf seiner Strahlenaustrittseite (26) eine Sinus-Wellenfläche (39) mit geradlinigen, parallelen Wellen (40) aufweist, deren Wellenlänge (g) etwa dem 3,64-fachen der Amplitude ($a_0$) entspricht und deren Wellenscheitel (41) senkrecht zu den Längsrändern (38) des Lichtlenkelementes (19) verlaufen.

## Claims

1. Device for illuminating a room (10) with glare-free diffuse sunlight, comprising at least one curved light-guiding member (19) that is intended to be arranged in a room-enclosing surface (11) facing the sun and is made of a transparent material and comprises an inlet surface (25), an outlet surface (26) and at least one lightguide boundary surface (28 through 31) for rays of sunlight (1 through 5), and is designed to diffuse any incident sun rays (1 through 5) and direct them to a specific point in the room (10), said inlet surface (25) and outlet surface (26) of the light-guiding member (19) being arranged at an angle (φ) relative to each other, **characterized in that** said light-guiding member (19) is an elongate thin plate of an essentially unvarying thickness (d) whose one flat longitudinal edge forms the sunlight inlet surface (25) while its other flat longitudinal edge forms the sunlight outlet surface (26) for the sun rays (1,2,3,5), and that said light-guiding member (19) comprises a curved middle portion (21) and at least one rectilinear end portion (20), with the opposed circumferential surfaces of said portions forming lightguide boundary surfaces (28,29,30, 31).

2. Device as set forth in claim 1, **characterized in that** the end portion (20) carrying the outlet surface (26) is provided on its circumferential surfaces (30,31) with a functional layer whose refractive index ($n_K$) is adapted to the refractive index ($n_L$) of the material of the light-guiding member (19) in such a manner that only light rays (1,3,5) which have undergone total reflection from the lightguide boundary surface (30 or 31, respectively) and will produce a light cone or light prism with an aperture angle (β) of between 60° and 72° in the room (10) to be illuminated are allowed to exit from the outlet surface (26).

3. Device as set forth in claim 2, **characterized in that** there is provided, on the outside of said functional layer, an absorption layer designed to absorb any sun rays (4) emitted via the circumferential surface (30 and 31, respectively) of said end portion (20).

4. Device as set forth in claim 3, **characterized in that** said absorption layer is a barrier layer impervious to light.

5. Device as set forth in claim 3, **characterized in that** said absorption layer is a light-attenuating layer.

6. Device as set forth in any of claims 3 or 5, **characterized in that** said absorption layer is a colour layer at least partially impervious to light.

7. Device as set forth in any of claims 2 through 6, **characterized in that** said functional layer is an adhesive bonding agent (32) whereby a plurality of light-guiding members (19) can be joined to one another or to a substrate means (33).

8. Device as set forth in claim 7, **characterized i n that** said substrate means (33) is a transparent film coated with an adhesive bonding agent (32) on both sides, such that either the adhesive bonding agent (32) or the film is the functional layer having the refractive index ($n_K$).

9. Device as set forth in any of claims 2 through 8, **characterized in that** the end portion (20) of the light-guiding member (19) has a flat underside (31) and a flat top side (30), and that said flat underside (31) carries a reflection layer on the outside of the functional layer, while said flat top side (30) carries an absorption layer on the outside of the functional layer.

10. Device as set forth in any of claims 3 through 9, **characterized in that** said absorption layer is a sheet-type substrate means (33) impervious to light and carries an adhesive bonding agent (32) on two mutually opposed surfaces (46,47), said adhesive bonding agent being used to join two adjoining light-guiding members (19) by at least one of their end portions (20).

11. Device as set forth in any of claims 9 or 10, **characterized in that** said reflection layer is a translucent plastic film carrying an evaporation-deposited layer of aluminium on the side facing away from the light-guiding member.

12. Device as set forth in any of claims 1 through 11, **characterized in that** said light-guiding member (19) is made of a thermoplastic synthetic material in its glassy state.

13. Device as set forth in any of claims 1 through 12, **characterized in that** said light-guiding member (19) is made of polycarbonate.

14. Device as set forth ion any of claims 7 through 13, **characterized in that** the adhesive bonding agent (32) is an acrylic-based (acrylate) adhesive bonding agent.

15. Device as set forth in any of claims 1 through 14, **characterized in that** said light-guiding member (10) is curved and built into the room-enclosing surface (11) in such a manner that the axis of incidence (34) on the inlet surface (25) comprises an angle (α) with the horizontal which corresponds to the maximum solar elevation angle at the annual average of the sun's altitude at the installation site, and that the axis of emission (35) from the outlet surface (26) of the light-guiding member (19) comprises an angle (β/2) with the horizontal which corresponds to the maximum value of one-half the aperture angle (β/2=aperture) of the bundle of rays emitted from said outlet surface.

16. Device as set forth in any of claims 1 through 15, **characterized in that** there is provided a plurality of light-guiding members (19) closely adjoining one another at one of their end portions (20,22) while being separated in the area of their lightguide boundary surfaces (28,29,30, 31).

17. Device as set forth in any of claims 1 through 16, **characterized in that** the lightguide boundary surfaces (30,31) at the end porions (20) of adjoining light-guiding members (19) are separated by adsorption layers coated on both sides with an adhesive bonding agent (32) covering their entire surface, while the lightguide boundary layers (28,29) at the central portions (21) are separated by air gaps (24).

18. Device as set forth in any of claims 1 through 17, **characterized in that** said light-guiding members (19) comprise projections (23) extending at right angles from their end portions (22) carrying the inlet surfaces (25), said projections causing adjoining light-guiding members (19) to engage in an overlapping manner.

19. Device as set forth in any of claims 1 through 18, **characterized in that** a stack of several adjoining light-guiding members (19), joined to each other by adhesive bonding if and where applicable, is arranged between two transparent panes (13,14) of a window (12;42) in such a manner that the outlet surfaces (26) of said light-guiding members (19) are directed at the point (36;44) to be illuminated within the room (10) .

20. Device as set forth in any of claims 1 through 19, **characterized in that** a stack of adjoining light-guiding members (19) is fixedly arranged between two panes (13,14) of an insulating glass window (12).

21. Device as set forth in any of claims 1 through 20, **characterized in that** a light-diffusion means (37) is provided on the outlet surface (26) of the light-guiding member (19) to ensure an even distribution of the direction of the emitted sun rays (1 through 5) as it varies in the course of a day.

22. Device as set forth in any of claims 1 through 21, **characterized in that** the outlet surface (26) of the light-guiding member (19) is itself configured as a light-diffusion means (37).

23. Device as set forth in any of claims 1 through 22, **characterized in that** there is provided, downstream of the outlet surface of the light-guiding member (19) when viewed in the direction of the light path, a profiled diffusor lens made of a transparent material.

24. Device as set forth in any of claims 1 through 23, **characterized in that** said light-diffusing means (37) comprises a sine wave surface (39) with straight-line parallel waves (40) on its beam outlet side (26), with the wavelength (g) thereof corresponding to approximately 3.64 times the amplitude $(a_0)$ while the wave crests (41) extend in a direction vertical to the longitudinal edges (38) of the light-guiding member.

**Revendications**

1. Dispositif destiné à alimenter une pièce (10) en lumière solaire non éblouissante et diffuse, avec au moins un élément de guidage de la lumière (19) courbé en matériau transparent à placer dans une surface entourant la pièce (11) orientée vers le soleil qui présente une surface d'entrée (25), une surface de sortie (26)et au moins une surface limite de guidage (28 à 31) pour les rayons solaires (1 à 5) et qui est conçu de manière à disperser les rayons solaires incidents (1 à 5) sur la surface d'entrée (25) et à les guider vers un endroit déterminé de la pièce (10), la surface d'entrée (25) et la surface de sortie (26) de l'élément de guidage de la lumière étant dirigées l'une vers l'autre sous un angle déterminé, **caractérisé par le fait que** l'élément de guidage de la lumière (19) est une plaque allongée mince d'épaisseur pour l'essentiel constante dont un bord longitudinal plan forme la surface d'entrée (25) et dont l'autre bord longitudinal plan (38) forme la surface de sortie (26) pour les rayons solaires (1, 2, 4, 5) et que l'élément de guidage de la lumière (19) présente une partie centrale (21) courbe et au moins une extrémité (20) rectiligne.dont les surfaces périphériques qui se font face forment des surfaces limites de guidage.

2. Dispositif conforme à la revendication 1, **caractérisé par le fait que** l'extrémité (20) qui supporte la surface de sortie (26) présente sur ses surfaces périphériques (30, 31) une couche fonctionnelle dont l'indice de réfraction $(n_K)$ est adapté à l'indice de réfraction $(n_L)$ du matériau de guidage de la lumière (19), de manière à ce que seuls les rayons (1, 3, 5) totalement réfléchis sur la surface limite de guidage (30 et/ou 31) qui génèrent un cône lumineux et/ou un prisme lumineux avec un angle d'ouverture (β) entre 60° et 72° dans la pièce à éclairer (10) quittent la surface de sortie (26).

**3.** Dispositif conforme à la revendication 2, **caractérisé par le fait qu'**une couche d'absorption qui absorbe les rayons solaires (4) qui sortent sur la surface périphérique (30 et/ou 31) de l'extrémité (20) est disposée sur la face externe de la couche fonctionnelle.

**4.** Dispositif conforme à la revendication 3, **caractérisé par le fait que** la couche d'absorption est une couche de barrage opaque.

**5.** Dispositif conforme à la revendication 3, **caractérisé par le fait que** la couche d'absorption est une couche qui voile la lumière.

**6.** Dispositif conforme à l'une des revendications 3 ou 5, **caractérisé par le fait que** la couche d'absorption est une couche de couleur au moins partiellement transparente.

**7.** Dispositif conforme à l'une des revendications 2 à 6, **caractérisé par le fait que** la couche fonctionnelle est un agent adhésif (32) qui permet de relier plusieurs éléments de guidage de la lumière (19) entre eux ou avec un support (33).

**8.** Dispositif conforme à la revendication 7, **caractérisé par le fait que** le support (33) est un film transparent dont les deux faces sont revêtues d'agent adhésif (32), l'aaent adhésif (32) ou le film étant la couche fonctionnelle présentant l'indice de réfraction voulu ($n_K$).

**9.** Dispositif conforme à l'une des revendications 2 à 8, **caractérisé par le fait que** l'extrémité (20) de l'élément de guidage de la lumière (19) présente une surface inférieure plane (31) et une surface supérieure plane (30) et que la face inférieure plane (31) présente une couche réfléchissante sur la face extérieure de la couche fonctionnelle et la face supérieure plane (30) une couche d'absorption sur la face extérieure de la couche fonctionnelle.

**10.** Dispositif conforme à l'une des revendications 3 à 9, **caractérisé par le fait que** la couche d'absorption est un support opaque plat (33) qui porte sur deux surfaces qui se font face (46, 47) un agent adhésif (32) qui relie deux éléments de guidage de la lumière (19) voisins à au moins une de leurs extrémités (20).

**11.** Dispositif conforme à l'une des revendications 9 ou 10, **caractérisé par le fait que** la couche réfléchissante est un film transparent métallisé à l'aluminium sur la face dirigée vers l'élément de guidage de la lumière.

**12.** Dispositif conforme à l'une des revendications 1 à 11, **caractérisé par le fait que** l'élément de guidage de la lumière (19) est composé d'un plastique thermoplastique à l'état de verre.

**13.** Dispositif conforme à l'une des revendications 1 à 12, **caractérisé par le fait que** l'élément de guidage de la lumière (19) est en polycarbonate.

**14.** Dispositif conforme à l'une des revendications 7 à 13, **caractérisé par le fait que** l'agent adhésif (32) est une colle à base d'acryle (acrylate).

**15.** Dispositif conforme à l'une des revendications 1 à 14, **caractérisé par le fait que** l'élément de guidage de la lumière (19) est courbé et monté dans la surface entourant la pièce (11) de manière à ce que la normale (34) sur la surface d'entrée (25) et l'horizontale forment un angle ($\alpha$) correspondant au plus grand angle d'ascension possible du soleil pour la hauteur moyenne du soleil sur toute l'année à l'emplacement de montage et que la normale de réflexion (35) et l'horizontale forment sur la surface de sortie (26) de l'élément de guidage de la lumière (19) un angle ($\beta/2$) correspondant au plus grand demi-angle d'ouverture possible ($\beta/2$=ouverture) du faisceau de rayons solaires qui sort de la surface de sortie (26).

**16.** Dispositif conforme à l'une des revendications 1 à 15, **caractérisé par** plusieurs éléments de guidage de la lumière (19) fortement adjacents à au moins une de leurs extrémités (20, 22) et séparés l'un de l'autre dans la zone de leurs surfaces limites de guidage (28, 29, 30, 31).

**17.** Dispositif conforme à l'une des revendications 1 à 16, **caractérisé par le fait que** les surfaces limites de guidage (30, 31) des extrémités (20) d'éléments de guidage de la lumière (19) adjacents sont séparées l'une de l'autre par des couches d'absorption dont les deux faces sont entièrement revêtues d'agent adhésif (32) et les surfaces limites de guidage (28, 29) des parties centrales (21) par des fentes d'air (24).

**18.** Dispositif conforme à l'une des revendications 1 à 17, **caractérisé par le fait que** les éléments de guidage de la lumière (19) présentent sur leurs extrémités (22) qui supportent les surfaces d'entrée (25) des nez orthogonaux (23) grâce auxquels des éléments de guidage de la lumière (19) adjacents se chevauchent.

**19.** Dispositif conforme à l'une des revendications 1 à 18, **caractérisé par le fait qu'**une pile de plusieurs éléments de guidage de la lumière (19) adjacents et éventuellement collés l'un à l'autre est disposée entre deux vitres transparentes (13, 14) d'une fenêtre (12; 42) de manière à ce que les surfaces de sortie (26) des éléments de guidage de la lumière (19) soient dirigées vers l'endroit de la pièce (10) à éclairer.

20. Dispositif conforme à l'une des revendications 1 à 19, **caractérisé par le fait qu'**une pile d'éléments de guidage de la lumière (19) adjacents est disposée de manière fixe entre deux vitres (13, 14) d'une fenêtre à vitrage isolant (12).

21. Dispositif conforme à l'une des revendications 1 à 20, **caractérisé par le fait qu'**un dispositif de dispersion de la lumière (37) qui répartit les rayons solaires (1 à 5) incidents dans différentes directions au cours d'une journée de manière homogène est prévu sur la surface de sortie (26) de l'élément de guidage de la lumière.

22. Dispositif conforme à l'une des revendications 1 à 21, **caractérisé par le fait que** la surface de sortie (26) de l'élément de guidage de la lumière (19) est elle-même conçue comme dispositif de dispersion de la lumière (37).

23. Dispositif conforme à l'une des revendications 1 à 22, **caractérisé par le fait qu'**un disque de dispersion profilé en matériau transparent est placé derrière la surface de sortie de l'élément de guidage de la lumière dans le sens des rayons.

24. Dispositif conforme à l'une des revendications 1 à 23, **caractérisé par le fait que** le dispositif de diffusion de la lumière (37) présente sur le côté de sortie des rayons (26) une surface d'ondes sinusoïdales (39) à ondes rectilignes et parallèles (40) dont la longueur d'onde (g) correspond à environ 3,64 fois l'amplitude ($a_0$) et dont le sommet d'onde (41) est parallèle aux bords longitudinaux (38) de l'élément de guidage de la lumière (19).

FIG.1

FIG. 2

FIG.3

EP 0 786 623 B1

FIG.4

FIG.5

FIG.6

FIG.7